# EUROPÄISCHE PATENTSCHRIFT

(11) **EP 3 210 860 B1**
(45) Veröffentlichungstag und Bekanntmachung des Hinweises auf die Patenterteilung: **29.01.2020**
(21) Anmeldenummer: 16157609.5
(22) Anmeldetag: 26.02.2016
(51) Int. Cl.: B62D 33/04

(54) **AUFBAU EINES NUTZFAHRZEUGS MIT WENIGSTENS EINER PROFILVERBINDUNG**
CONSTRUCTION OF A COMMERCIAL VEHICLE WITH AT LEAST ONE PROFILE CONNECTION
ASSEMBLAGE D'UN VEHICULE AUTOMOBILE COMPRENANT AU MOINS UNE LIAISON DE PROFILE

(43) Veröffentlichungstag der Anmeldung: 30.08.2017
(73) Patentinhaber: Schmitz Cargobull AG, 48341 Altenberge (DE)
(72) Erfinder: Dorr, Christoph, 46514 Schermbeck (DE); Sundermann, Karin, 48703 Stadtlohn (DE); Westhoff, Ludger, 46354 Südlohn (DE); Schlumm, Dr. Michael, 48683 Ahaus (DE)
(74) Vertreter: Cohausz & Florack

(56) Entgegenhaltungen:
- EP-A1- 0 607 575
- EP-A1- 2 431 248
- DE-U1- 9 418 262

## Beschreibung

Die Erfindung betrifft einen Aufbau eines Nutzfahrzeugs, insbesondere eines Lastkraftwagens, Anhängers oder Sattelaufliegers, mit wenigstens einem Paneel, vorzugsweise einem Stirnwandpaneel, einem Seitenwandpaneel oder einem Dachpaneel, und mit wenigstens einem über eine Profilverbindung mit dem Paneel verbundenen Anbauteil, vorzugsweise eines weiteren Paneels, eines Bodens und/oder eines Rückwandrahmens, wobei die Profilverbindung als Nut/Feder-Verbindung aus zwei korrespondierenden und miteinander verklebten Verbindungsprofilen gebildet ist.

Nutzfahrzeuge der vorgenannten Art können beispielsweise Lastkraftwagen, Anhänger und Sattelauflieger sein. Dabei sind die Nutzfahrzeuge insbesondere für den Transport von Gütern, wie Stückgütern, im öffentlichen Straßenverkehr vorgesehen. Zu diesem Zweck weisen die Nutzfahrzeuge unterschiedliche Arten von Aufbauten auf, welche Laderäume zur Aufnahme der zu transportierenden Güter bereitstellen. Es sind beispielsweise sogenannte Planenaufbauten bekannt, welche wenigstens eine Plane zum Verschließen wenigstens einer Seite und/oder des Dachs des Planenaufbaus aufweisen. Wenn die Plane entlang der Seitenwand verschoben werden kann, spricht man auch von sogenannten Curtainsidern.

Bei sogenannten Kofferaufbauten sind dagegen die Seitenwände und das Dach durch feste Wände verschlossen. Auch die Stirnwand ist bei Kofferaufbauten typischerweise als feste Wand ausgebildet, während die Rückwand meist aus zwei Flügeltüren, einem Rolltor oder dergleichen gebildet wird, um den Kofferaufbau von hinten beladen zu können. Die Seitenwände, das Dach und die Stirnwand von Kofferaufbauten sind in der Regel in Form von mehrschichtigen Paneelen aufgebaut, die eine innere strukturgebende Decklage, eine äußere strukturgebende Decklage und eine Kernlage aus einem geschäumten Kunststoff umfassen. Die Decklagen können selbst jeweils mehrlagig ausgebildet sein und dienen der Aussteifung der Paneele, weshalb die Decklagen meist wenigstens eine Schicht aus einem Metall und/oder einem faserverstärkten Kunststoff aufweisen. Da die Kofferaufbauten geschlossen sind und infolge des geschäumten Kunststoffs eine hohe thermische Isolation bereitstellen, sind Kofferaufbauten in besonderem Maße für den Transport von feuchtigkeitsempfindlichen und/oder temperaturempfindlichen Gütern, also beispielsweise für den sogenannten Trockentransport und/oder den Kühltransport geeignet.

Die einzelnen Paneele müssen zur Bildung eines Kofferaufbaus mit anderen Paneelen und Anbauteilen verbunden werden, wobei es sich bei den Anbauteilen um Teile eines Rückwandrahmens, Teile des Bodens oder aber mit einem weiteren Paneel verbundene Anschlussteile handeln kann. Es kann auch vorgesehen sein, dass die Seitenwände, das Dach und/oder die Stirnwand aus mehreren Paneelen zusammengesetzt werden. Dann bedarf es einer Verbindung der einzelnen Paneele einer Wand oder des Dachs untereinander, wobei ebenfalls ein Paneel über eine entsprechende Profilverbindung mit einem Anbauteil eines anderen Paneels verbunden werden kann, wobei das andere Paneel Teil derselben Wand oder desselben Dachs sein kann aber nicht muss.

Für die zuvor genannten Verbindungen eines Aufbaus, insbesondere eines Kofferaufbaus, eines Nutzfahrzeugs sind bereits unterschiedliche Verbindungen bekannt. So werden teilweise Profilverbindungen eingesetzt, die als Nut/Feder-Verbindung aus zwei korrespondierenden Verbindungsprofilen gebildet werden. Durch die korrespondierend ausgebildeten Nuten und Federn wird das positionsgenaue Fügen der Profilverbindungen vereinfacht. Zudem können die Verbindungsprofile der Profilverbindungen noch miteinander verklebt werden, um einer dauerhafte Verbindung zu erhalten.

Grundsätzlich sollen die Profilverbindungen möglichst einfach und schnell gefügt werden können. Gleichzeitig sollen die Verbindungsprofile kostengünstig hergestellt werden und hohe Kräfte übertragen können. Nicht zuletzt müssen die Profilverbindungen eine ausreichende Flexibilität zulassen, damit übliche Verwindungen des Aufbaus oder dergleichen nicht zu einer Beschädigung des Aufbau bzw. der Profilverbindung führen. Diesem Anforderungsprofil genügen die bekannten Profilverbindungen noch nicht so dass diesbezüglich weiter Optimierungsbedarf besteht. Das Dokument EP 0607 575 beschreibt einen Aufbau eines Lastkraftwagens, von dem die vorliegende Erfindung ausgeht.

Daher liegt der vorliegenden Erfindung die Aufgabe zugrunde, den eingangs genannten und zuvor näher erläuterten Aufbau derart auszugestalten und weiterzubilden, dass er einfach, schnell und kostengünstig zu fertigen sowie langlebig und stabil ist.

Diese Aufgabe ist bei einem Aufbau nach dem Oberbegriff von Anspruch 1 dadurch gelöst, dass die Profilverbindung wenigstens zwei Nuten und wenigstens zwei mit den wenigstens zwei Nuten in Eingriff stehende Federn aufweist.

Durch diese Ausgestaltung wird eine zuverlässigere Profilverbindung geschaffen, die sich dennoch sehr einfach und positionsgenau fügen lässt. Es greifen nämlich wenigstens zwei Federn in wenigstens zwei Nuten. Mithin wird eine wenigstens doppelte Verbindung und eine wenigstens doppelte Positionierung erreicht. Zudem wird die Profilverbindung noch verstärkt, weil die in die zwei Nuten eingreifenden Federn großflächige Verbindungsbereiche bzw. umfangreiche Verbindungsflächen bereitstellen, die sich für das Verkleben der Verbindungsprofile untereinander nutzen lassen. Dennoch können die Verbindungsprofile sehr einfach gefertigt und miteinander verbunden werden, was sich günstig auf die Fertigungskosten des Aufbaus insgesamt auswirkt. Dabei sind insbesondere die Fertigungskosten von Aufbauten, insbesondere Kofferaufbauten, von Nutzfahrzeugen, etwa in Form von Lastkraftwagen, mit einem zulässigen Gesamtgewicht zwischen etwa 3 und 6 Tonnen von besonderer Bedeutung. Entsprechende Nutzfahrzeuge werden auch als Lieferwagen oder Zustellfahrzeuge bezeichnet, da diese oft zum Liefern von Gütern oder Sendungen an mehrere Endkunden, und zwar bedarfsweise gewerbliche als auch private Endkunden genutzt werden. Bei Nutzfahrzeugen, die motorisch angetrieben und direkt mit dem Aufbau versehen sind, besteht für Hersteller ein sehr erheblicher Kostendruck, auf den die Profilverbindungen einen nicht unerheblichen Einfluss haben. Bei Anhängern oder Sattelaufliegern kommen noch weitere Kostenfaktoren hinzu, die den Einfluss der Profilverbindung auf die Fertigungskosten des Nutzfahrzeugs bzw. Aufbaus mindern können.

Bei der Profilverbindung kann der Einfachheit halber ein Verbindungsprofil die wenigstens zwei Nuten und das korrespondierende Verbindungsprofil die korrespondierenden wenigstens zwei Federn aufweisen. Allerdings ist es aus konstruktiver Sicht, insbesondere zur Verringerung des Platzbedarfs für die Verbindung, günstig, wenn wenigstens ein Verbindungsprofil, insbesondere aber beide Verbindungsprofile einer Profilverbindung sowohl wenigstens eine Feder als auch wenigstens eine Nut aufweisen. So können beispielsweise Nutflanken einerseits eine Nut definieren und andererseits als Feder in eine gegenüberliegende Nut des angrenzenden Verbindungsprofils eingreifen. Dabei gilt grundsätzlich, dass die Profilverbindung umso fester sein kann, je effizienter die Profilverbindung den für die Verbindung zur Verfügung stehenden Raum ausnutzt.

Bei einer ersten bevorzugten Ausgestaltung des Aufbaus sind die wenigstens zwei Nuten wenigstens teilweise mit einem Klebstoff ausgefüllt und mit den jeweils in die Nuten eingreifenden Federn verklebt. Auf diese Weise wird ein zuverlässiger und langlebiger Stoffschluss zwischen den Verbindungsprofilen erreicht, der zugleich in der Lage ist, sehr hohe Kräfte zu übertragen. Als besonders effektiv und zweckmäßig hat es sich ergeben, wenn sich der Klebstoff zusammenhängend von wenigstens einer Nut bis in wenigstens eine andere Nut erstreckt. Dies vergrößert die miteinander verklebten Flächen und kann zudem das Einbringen des Klebstoffs vereinfachen. Der Klebstoff kann beispielsweise an nur einer Stelle, beispielsweise in nur einer Nut vorgesehen sein und beim Fügen der Profilverbindung dann bis in wenigstens eine andere Nut der Profilverbindung gelangen, etwa weil der Klebstoff durch das Eingreifen einer Feder in die den Klebstoff aufweisende Nut verdrängt und so in eine angrenzende Nut gedrückt wird. Dabei gehören vorzugsweise die über den Klebstoff direkt miteinander verbundenen Nuten zu einem Verbindungsprofil der Profilverbindung, um eine umfangreiche und effektive stoffschlüssige Verbindung innerhalb der Profilverbindung bereitstellen zu können. Gleichzeitig kann es zur Vereinfachung des Aufbringens und der Verteilung des Klebstoffs in der Profilverbindung jedoch bevorzugt sein, wenn sich der Klebstoff von einer Nut des einen Verbindungsprofils in eine Nut des anderen Verbindungsprofils erstreckt. Dann steht zudem vorzugsweise noch die Nut des anderen Verbindungsprofils für die Bereitstellung der stoffschlüssigen Verbindung zur Verfügung.

Um die Profilverbindung weiter zu verstärken und/oder um die Profilverbindung vor dem vollständigen Aushärten des Klebstoffs sicher zusammen zu halten, etwa während eines weiteren, nachfolgenden Fertigungsschritts, kann die Profilverbindung wenigstens eine Rastverbindung zwischen den Verbindungsprofilen aufweisen. Um eine platzsparende Profilverbindung bereitstellen zu können, wird die Rastverbindung vorzugsweise zwischen wenigstens einer Nut und einer in die wenigstens eine Nut eingreifenden Feder gebildet. So können für einzelne Abschnitte der Profilverbindung doppelte oder mehrfache Funktionalitäten bereitgestellt werden, ohne diese Funktionalitäten bzw. Verbindungen nebeneinander vorsehen zu müssen. Die vorstehenden Vorteile werden insbesondere auch dann erreicht, wenn die Rastverbindung zwischen beiden Nutflanken wenigstens einer Nut und der in diese Nut eingreifenden Feder vorgesehen ist.

Die Nut/Feder-Verbindung der Verbindungsprofile kann vorzugsweise so ausgebildet werden, dass die Verbindungsprofile nicht exakt bis zu einem bestimmten Maß oder Umfang ineinander geschoben werden müssen. Vielmehr kann vorgesehen sein, dass die Verbindungsprofile auch in unterschiedlich weit eingeschobener Stellung eine dauerhafte und feste Verbindung bereitstellen. Auf diese Weise kann beispielsweise ein Toleranzausgleich für die Verbindung bereitgestellt werden. Dabei ist es besonders bevorzugt, wenn die Nut/Feder-Verbindung als Rastverbindung ausgebildet ist und/oder die Verbindungsprofile stoffschlüssig über einen Klebstoff verbunden, respektive verklebt, sind. Dann kommt es nicht so sehr darauf an, wie weit die Verbindungsprofile ineinandergeschoben sind. Zu diesem Zweck ist es weiter bevorzugt, wenn die Rastverbindung mehrere Rastvorsprünge derart aufweist, dass sich bei unterschiedlich weit ineinander geschobenen Verbindungsprofilen unterschiedliche Rastvorsprünge hintergreifen. Dies kann dazu führen, dass je nachdem wie weit die Verbindungsprofile ineinander geschoben sind, einzelne Rastvorsprünge nicht aktiv an der Bildung einer Rastverbindung beteiligt sind. Diese könnten aber an der Bildung der Rastverbindung beteiligt sein, wenn die Verbindungsprofile weiter oder weniger weit ineinander geschoben wären.

Um die stoffschlüssige und/oder die Rastverbindung zwischen den Verbindungsprofilen der Profilverbindung zu verstärken und/oder zu bilden, kann wenigstens eine Feder wenigstens zwei Federabschnitte aufweisen. Diese Federabschnitte sind dabei insbesondere jeweils gegenüberliegenden Nutflanken zugeordnet. Ferner sind die Federabschnitte beispielsweise flexibel und/oder verstellbar vorgesehen. Die Federabschnitte lassen sich so gegeneinander in Richtung der zugeordneten Nutflanken verstellen. Die Federabschnitte können dabei der Einfachheit halber aufgrund einer Rückstellkraft infolge einer Verformung oder Vorspannung der Federabschnitte in Richtung der zugehörigen Nutflanken drücken. Beispielweise kann die wenigstens eine Feder so breit vorgesehen sein, dass sie nur unter Zusammendrücken der Federabschnitte in die korrespondierende Nut eingeführt werden kann. In der Nut drücken die Federabschnitte dann wieder infolge der aus der entsprechenden Verformung der Feder beim Eingreifen in die Nut resultierenden Rückstellkraft nach außen in Richtung der zugehörigen Nutflanken. Alternativ oder zusätzlich kann aber auch wenigstens ein Fremdelement zwischen die Federabschnitte gebracht, insbesondere eingeschoben, werden, so dass die Federabschnitte unter Aufweitung der Feder in Richtung der gegenüberliegenden Nutflanken auseinander gedrückt, mithin gegeneinander in Richtung der jeweils zugeordneten Nutzflanken verstellt werden.

Erfindungsgemäss ist der Einsatz der Profilverbindung in Kombination mit Paneelen vorgesehen, die wenigstens zwei äußere strukturgebende Decklagen aufweisen, diese lassen sich zweckmäßig mit einem Verbindungsprofil versehen und zudem leicht mit Anbauteilen verbinden. Die Decklagen können dabei jeweils als Strukturlage ausgebildet sein oder eine Strukturlage umfassen, um dem Paneel die nötige Steifigkeit zu verleihen. Als Strukturlage kommt dabei insbesondere eine Lage aus Kunststoff, faserverstärktem Kunststoff, Stahl oder Aluminium in Frage, da diese Materialen die benötigten Eigenschaften bereitstellen und erschwinglich sind. Die Decklagen können aber bedarfsweise noch weitere Schichten aufweisen, die beispielsweise der Anbindung einer Decklage, dem Schutz der Strukturlage und/oder dem optisch ansprechenden Abschluss der Decklage nach außen dienen können. Alternativ oder zusätzlich zur Ausgestaltung der äußeren Decklagen ist es bevorzugt, wenn zwischen den Decklagen eine Kernlage aus einem, insbesondere geschäumten, Kunststoff vorgesehen ist. Derartige Kernlagen sind fest und gleichzeitig leicht.

Um ein Verbindungsprofil fest mit dem Paneel zu verbinden und/oder die entsprechende Schmalseite des Paneels, etwa zum Schutz der Kernlage, zu verschließen, kann ein Verbindungsprofil der Profilverbindung zwei Längsseiten aufweisen, die einander gegenüberliegend angeordnet sind und jeweils bezogen auf das Verbindungsprofil nach außen weisen. Diese Längsseiten können dann jeweils mit einer äußeren Decklage des Paneels verbunden, vorzugsweise verklebt, sein. So wird ein langlebiger Abschluss des Paneels, bedarfsweise über die gesamte Breite der Schmalseite, erreicht und zudem eine feste und dauerhafte Anbindung des Verbindungsprofils an die Decklagen bzw. das Paneel bereitgestellt. Erfindungsgemäß weist ein Verbindungsprofil der Profilverbindung eine nach außen weisende und mit einer nach außen weisenden äußeren Decklage des Paneels verklebte Längsseite auf.

Um den Abschluss der entsprechenden Schmalseite des Paneels noch zu verbessern oder um die positionsgenaue Montage des Verbindungsprofils am Paneel in einfacher Weise sicherzustellen, kann ein Verbindungsprofil der Profilverbindung an zwei einander gegenüberliegenden, nach außen weisenden bzw. äußeren Längsseiten jeweils einen Anschlag zur Anlage an ein freies Ende einer Decklage des Paneels aufweisen. So kann beispielsweise das Verbindungsprofil von außen auf die Decklagen aufgeschoben werden oder die Decklagen positionsgenau auf bzw. an dem Verbindungsprofil vorgesehen werden.

Alternativ oder zusätzlich kann ein Verbindungsprofil der Profilverbindung an zwei einander gegenüberliegenden äußeren Längsseiten jeweils eine Rippe aufweisen. Die Rippen können das Paneel außen umgreifen. So wird ein schmutz- und feuchtigkeitsabweisender Abschluss der Profilverbindung erreicht. Um eine hohe Funktionalität der Profilverbindung auf geringem Raum bereitzustellen, können die Rippen durch Nutflanken ausgebildet sein. Den Rippen kann so eine Doppelfunktion verliehen werden, um eine hochintegrative Profilverbindung bereitzustellen.

Um eine feste Verbindung zwischen dem Paneel und dem wenigstens einen Verbindungsprofil der Profilverbindung zu etablieren, kann es zweckmäßig sein, wenn das Verbindungsprofil eine zur gegenüberliegenden Schmalseite des Paneels offene Aufnahme aufweist. Die Aufnahme ist dann zugänglich für den geschäumten Kunststoff aus der Kernlage. Geschäumter Kunststoff, der gegebenenfalls überschüssig ist, kann also beim Ausschäumen des Paneels in der Aufnahme aufgenommen werden. Ferner kann die Aufnahme noch wenigstens eine Hinterschneidung aufweisen, die gesehen von der gegenüberliegenden Schmalseite einen Hinterschnitt bereitstellt. Weiter bevorzugt ist es dabei, wenn an beiden Seiten der Aufnahme eine solche Hinterschneidung vorgesehen ist. Der die Kernlage des Paneels bildende, geschäumte Kunststoff kann sich dann bis in die Aufnahme hinein erstrecken und die wenigstens eine Hinterschneidung formschlüssig hintergreifen. Nach dem Aushärten des geschäumten Kunststoffs, entsteht so ein Formschluss zwischen der Kernlage bzw. dem Material der Kernlage und dem Verbindungsprofil.

Zur Abdichtung der Profilverbindung kann diese ein Dichtelement aufweisen. Dabei bietet es sich der Einfachheit halber an, wenn das Dichtelement in wenigstens einer, insbesondere einer bezogen auf den Aufbau äußeren, Nut wenigstens eines Verbindungsprofils vorgesehen ist und dort einen Spalt zwischen der Nut und einer in die Nut eingreifenden korrespondierenden Feder abdichtet. Dabei wird eine besonders zuverlässige Abdichtung erreicht, wenn das Dichtelement zwischen einem freien Ende der Feder und dem Nutgrund der zugehörigen Nut angeordnet ist. Das Dichtelement kann der Einfachheit halber aus einem elastischen Kunststoff oder Gummi bestehen.

Um die Paneelherstellung zu vereinfachen und zu beschleunigen, bietet es sich an, das Paneel nach dem Einbringen des wenigstens einen Verbindungsprofils zwischen die Decklagen auszuschäumen. Dabei muss dann aber die durch den geschäumten Kunststoff verdrängte Luft aus dem Paneel entweichen. Zu diesem Zweck kann das wenigstens eine Verbindungsprofil wenigstens einen sich in Längsrichtung des Verbindungsprofils erstreckenden und an wenigstens einem Längsende des Verbindungsprofils offenen Entlüftungskanal aufweisen. Über diesen Entlüftungskanal kann die beim Ausschäumen im inneren des Paneels verdrängte Luft nach außen abgeführt werden. Damit die verdrängte Luft auch problemlos in den Entlüftungskanal gelangen und darin abströmen kann, bietet es sich weiter an, wenn der Entlüftungskanal zwischen den Längsenden des Verbindungsprofils wenigstens eine weitere Öffnung aufweist, die aus dem Entlüftungskanal zum Inneren des Paneels hin gerichtet ist. Die Öffnung bildet dann wenigstens während des Ausschäumens des Paneels eine Verbindung zwischen der Luft im inneren des Paneels und im inneren des Entlüftungskanals des wenigstens einen Verbindungsprofils.

Die Herstellung des Paneels und/oder des Aufbaus kann auch dadurch vereinfacht werden, dass das wenigstens eine Verbindungsprofil wenigstens im Wesentlichen symmetrisch zu einer Ebene parallel zum Paneel ausgebildet ist. Dann spielt es für die Montage grundsätzlich keine Rolle, wenn die Längsenden des Verbindungsprofils etwa bei der Fertigung des Paneels vertauscht worden sind. Hierauf muss also nicht geachtet werden und es wird so die Bildung von Ausschuss verringert.

Um für einen Toleranzausgleich beim Bilden eines Paneels in einer Richtung senkrecht zum Paneel zu sorgen, bietet es sich an, wenn das Verbindungsprofil zwischen zwei Decklagen in einer Richtung senkrecht zum Paneel zusammengedrückt werden kann. Um dies zu erreichen, können einander gegenüberliegende, nach außen weisende Längsseiten des Verbindungsprofils über wenigstens ein Scharnierelement, wenigstens einen sich in einem Winkel von maximal 80°, vorzugsweise wenigstens 70°, zu einer Ebene parallel zum Paneel erstreckenden Steg und/oder durch wenigstens einen gebogenen Steg miteinander verbunden sei. Bedarfsweise wird das Scharnierelement durch wenigstens einen der Stege der vorgenannten Art gebildet. Das wenigstens eine Scharnierelement bzw. der wenigstens eine Steg können sich dann verstellen, wenn ein hinreichender Druck von außen senkrecht zum Paneel auf das Verbindungsprofil ausgeübt wird. Besonders zweckmäßig kann es sein, wenn das wenigstens eine Scharnierelement durch zwei Stege gebildet wird, die in einem Winkel von maximal 80°, vorzugsweise wenigstens 70°, bezogen auf eine Ebene parallel zum Paneel V-förmig aufeinander stoßen. Alternativ oder zusätzlich können zwei Scharnierelemente bedarfsweise einen Entlüftungskanal begrenzen und/oder bilden.

Für eine einfache und kostengünstige Herstellung der Verbindungsprofile kann es zweckmäßig sein, wenigstens ein Verbindungsprofil aus Kunststoff, insbesondere aus PVC, vorzugsweise als Extrusionsprofil, zu bilden. Alternativ oder zusätzlich kann aber auch wenigstens ein Verbindungsprofil aus Metall, insbesondere Stahl oder Aluminium gebildet werden. Im Regelfall wird die Verwendung von Kunststoff kostengünstiger sein, aber die Verwendung von Metall eine höhere Festigkeit und oder Steifigkeit bereitstellen.

Um eine Vereinfachung bei der Herstellung des Aufbaus zu erreichen und die Vorteile der Profilverbindung möglichst umfassend nutzen zu können, kann wenigstens ein Paneel des Aufbaus an wenigstens zwei, vorzugsweise wenigstens drei, insbesondere vier, Schmalseiten jeweils ein Verbindungsprofil der zuvor beschriebenen Art zur Bildung der zuvor beschriebenen Profilverbindung aufweisen. Dabei kann es sich wenigstens teilweise um wenigstens im Wesentlichen gleichartige Verbindungsprofile und/oder wenigstens teilweise um korrespondierende Verbindungsprofile handeln. Die korrespondierenden Verbindungsprofile sind dabei insbesondere derart korrespondierend zueinander ausgebildet, dass die Verbindungsprofile grundsätzlich zur Bildung einer gemeinsamen Profilverbindung geeignet wären.

Nachfolgend wird die Erfindung anhand einer lediglich Ausführungsbeispiele darstellenden Zeichnung näher erläutert. In der Zeichnung zeigt
- Fig. 1: ein Nutzfahrzeug mit einem erfindungsgemäßen Aufbau in einer perspektivischen Ansicht,
- Fig. 2A-B: eine Profilverbindung des Aufbaus gemäß Fig. 1 in einer Schnittdarstellung,
- Fig. 3: die Verbindung zwischen einem Seitenwandpaneel und dem Dach des Aufbaus gemäß Fig. 1 mit der Profilverbindung gemäß Fig. 2A in einer Schnittdarstellung,
- Fig. 4: die Verbindung zwischen einem Seitenwandpaneel und dem Boden des Aufbaus gemäß Fig. 1 mit der Profilverbindung gemäß Fig. 2A in einer Schnittdarstellung und
- Fig. 5: die Verbindung zwischen einem Seitenwandpaneel und einem Rückwandrahmenelement des Aufbaus gemäß Fig. 1 in einer Schnittdarstellung,

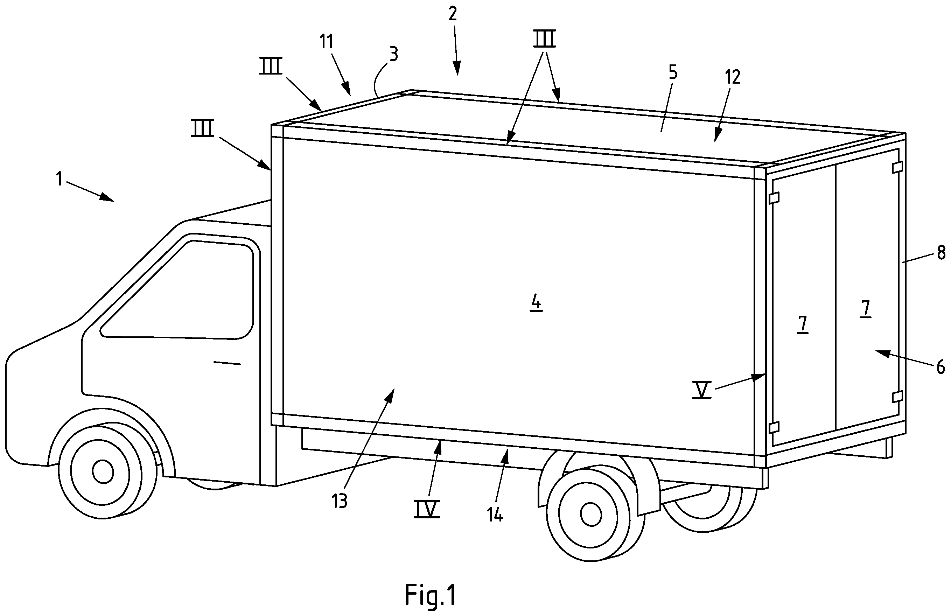

In der Fig. 1 ist ein Nutzfahrzeug 1 mit einem Aufbau 2 in Form eines Kofferaufbaus dargestellt. Bei dem Nutzfahrzeug 1 handelt es sich um einen motorgetriebenen Lastkraftwagen mit einem zulässigen Gesamtgewicht zwischen 3 und 6 Tonnen. Der Aufbau 2 weist eine Stirnwand 3, zwei Seitenwände 4 und ein Dach 5 auf. Die Rückwand 6 des Aufbaus 2 wird beim dargestellten und insoweit bevorzugten Aufbau 2 durch zwei Flügeltüren 7 gebildet, die über Scharniere an einem Rückwandrahmen 8 angeschlagen sind. Es wäre aber auch ein Rolltor oder dergleichen denkbar. Die Stirnwand 3, das Dach 5 und die Seitenwände 4 werden ferner durch Paneele gebildet, die zwei äußere Decklagen 9 und eine dazwischen vorgesehene Kernlage 10 aus einem geschäumten Kunststoff, insbesondere Polyurethan (PU), aufweisen. Die Decklagen 9 sind jeweils mehrschichtig aufgebaut und umfassen eine Strukturlage aus Metall oder aus einem, insbesondere faserverstärkten, Kunststoff. Zudem sind die Decklagen 9 an den nach außen weisenden Seiten mit optisch ansprechenden und die Strukturlagen schützenden Folien versehen. Die entsprechenden Paneele des Aufbaus 2 werden auch als Stirnwandpaneel 11, Dachpaneel 12 und Seitenwandpaneel 13 bezeichnet.

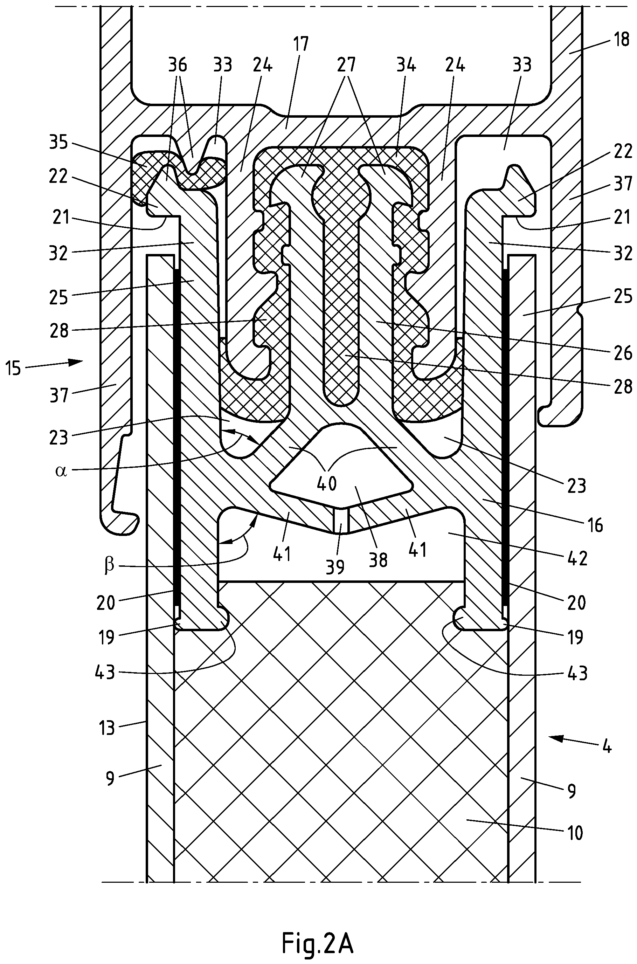

Zur Verbindung der Seitenwände 4 mit dem Dach 5, der Stirnwand 3 und dem Boden 14 dienen bei dem dargestellten und insoweit bevorzugten Aufbau 2 Profilverbindungen 15. Die Profilverbindung 15 zwischen der Seitenwand 3 und entweder dem Dach 5 oder der Stirnwand 4, die beim dargestellten und insoweit bevorzugten Aufbau 2 einander entsprechen, ist in der Fig. 2A-B im Detail dargestellt. Das Seitenwandpaneel 13 weist zu beiden äußeren Seiten Decklagen 9 auf, die der Einfachheit halber als einlagige Decklagen 9 dargestellt sind. Zwischen den Decklagen 9 befindet sich die Kernlage 10 aus geschäumtem Kunststoff. An dem dargestellten Rand des Seitenwandpaneels 13, bei dem es sich aber auch um ein anderes Paneel handeln könnte, weshalb nachfolgend auch allgemein von einem Paneel gesprochen wird, ist ein Verbindungsprofil 16 eingelassen, das mit einem weiteren korrespondierenden Verbindungsprofil 17 eines Anbauteils 18 eine Profilverbindung 15 bildet. Das Anbauteil 18 ist seinerseits in nicht dargestellter Weise mit dem Dachpaneel 12 oder dem Stirnwandpaneel 11 verbunden. Die Verbindungsprofile des Paneels 13 und des Anbauteils 18 könnten prinzipiell auch vertauscht werden. bevorzugt ist jedoch die in der Fig. 2A-B dargestellte Anordnung der Verbindungsprofile 16,17.

Zudem kann das Anbauteil 18 auch ein Element eines angrenzenden Paneels sein, also beispielsweise ebenfalls wenigstens teilweise in dem angrenzenden Paneel aufgenommen sein. Dies ist insbesondere dann der Fall, wenn die über die Profilverbindung 15 verbundenen Paneele in einer gemeinsamen Ebene angeordnet sind, also bedarfsweise zusammen wenigstens einen Teil einer Seitenwand 4, der Stirnwand 3 und/oder des Dachs 5 bilden. Anbauteile 18 im Sinne eines Adapters kommen insbesondere, aber weder ausschließlich noch zwingend, zur Verbindung separater Paneele, insbesondere über Eck, also beispielsweise zum Verbinden einer Seitenwand 4 mit der Stirnwand 3 oder dem Dach 5, in Frage.

Vor diesem Hintergrund wird der besseren Verständlichkeit halber und zur Vermeidung unnötiger Wiederholungen weiter zwischen dem Paneel 13 und dem Anbauteil 18 unterschieden, auch wenn das Anbauteil 18 bedarfsweise als Teil eines angrenzenden Paneels verstanden werden kann. Hinzukommt, dass die Unterscheidung zwischen dem Verbindungsprofil 16 des Paneels 13 und dem Verbindungsprofil 17 des Anbauteils 18 nicht zwingend in der beschriebenen Weise zu erfolgen hat. Die Zuordnung der Verbindungsprofile 16,17 könnten auch untereinander getauscht sein, auch wenn die in der Fig. 2A-B dargestellte Zuordnung der Verbindungsprofile 16,17 bevorzugt ist. Die ist beispielweise der Möglichkeit geschuldet, das Verbindungsprofil 16, des Paneels 13 in dieses zu integrieren bzw. das Verbindungsprofil 16 wenigstens teilweise in das Paneel 13 einzubringen.

Das Verbindungsprofil 16 des Paneels 13 ist, wie in der Fig. 2A dargestellt ist, an seinen einander gegenüberliegenden, nach außen weisenden Seiten mit den Decklagen 9 verklebt. Dazu weist das Verbindungsprofil 16 einen an gegenüberliegenden Seiten, beispielsweise als Nasen ausgebildete, Vorsprünge 19 auf, die von innen an den Decklagen 9 anliegen und zu beiden Seiten des Verbindungsprofils 16 einen Klebespalt 20 zwischen den einander gegenüberliegenden, nach außen weisenden Seiten des Verbindungsprofils 16 und den zugehörigen Decklagen 9 definieren. Die Klebespalten 20 sind wenigstens teilweise mit einem Klebstoff ausgefüllt, der für eine stoffschlüssige Verbindung zwischen dem Verbindungsprofil 16 und den Decklagen 9 sorgt. Bei der Positionierung des Verbindungsprofils 16 relativ zu den Decklagen 9 können Toleranzen der Decklagen 9 ausgeglichen werden. Das Verbindungsprofil 16 kann dazu je nach Bedarf mehr oder weniger weit gegenüber den Decklagen 9 in Fügerichtung nach außen vorstehen. Dennoch weist das Verbindungsprofil 16 an beiden äußeren Seiten jeweils einen Anschlag 21 auf. Die Anschläge 21 können mit den zugehörigen Decklagen 9 in Anlage gelangen, müssen dies aber nicht. Das Verbindungsprofil 16 ragt also maximal soweit in den Zwischenraum zwischen den Decklagen 9 hinein, bis die Anschläge 21 des Verbindungsprofils 16 mit wenigstens einem Rand der Decklagen 9 in Anlage gelangen. Beim dargestellten und insoweit bevorzugten Verbindungsprofil 16 werden die Anschläge 21 durch nach außen vorstehende Nasen 22 gebildet.

Im Querschnitt des Verbindungsprofils 16 zwischen den beiden Decklagen 9 des Paneels 13 weist das Verbindungsprofil 16 zwei Nuten 13 auf, in die jeweils eine Feder 24 des korrespondierenden Verbindungsprofils 17 des Anbauteils 18 eingreift. Die die Anschläge 21 bildenden Nasen 22 sind dabei im Endbereich jeweils einer Nutflanke 25 vorgesehen.

Zwischen den Nuten 23 des Verbindungsprofils 16 des Paneels 13 ist eine Feder 26 vorgesehen, die beim dargestellten und insoweit bevorzugten Aufbau 2 zwei separate Abschnitte 27 aufweist, die voneinander durch einen Schlitz 28 oder Spalt getrennt sind, der sich wenigstens im Wesentlichen parallel zum Paneel 13 erstreckt. Durch diese in der Fig. 2A dargestellte Ausgestaltung kann die Feder 26 in einer Richtung senkrecht zum Paneel 13 zusammengedrückt werden, etwa um in die korrespondierende Nut 28 des Verbindungsprofils 17 des Anbauteils 28 eingeführt werden zu können. Alternativ oder zusätzlich erlaubt es diese Ausgestaltung der entsprechenden, hier zentral vorgesehenen, Feder 26 des Verbindungsprofils 16 des Paneels 13 sich in der korrespondierenden Nut 28 aufzuweiten. Dies kann infolge einer Rückstellkraft erfolgen, die die Federabschnitte 27 voneinander weg, also nach außen in Richtung der Decklagen 9, drückt. Die Rückstellkraft kann beim Zusammendrücken der Feder 26 beim Einführen in die korrespondierende Nut 28 gebildet werden und dem Umstand Rechnung tragen, dass die Federabschnitte 27 wieder in ihre ursprüngliche Lage zurückdrängen.

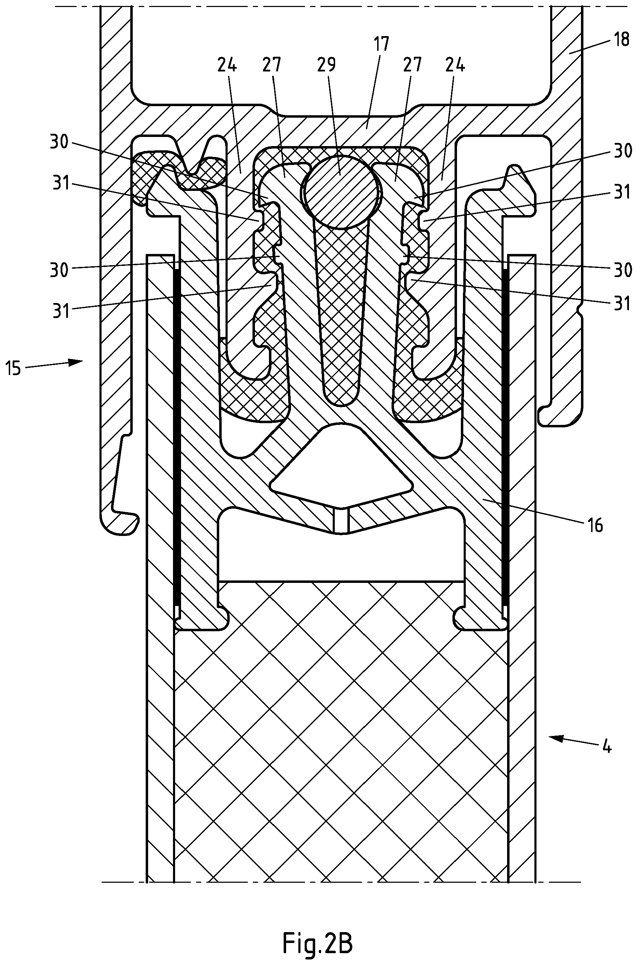

Alternativ oder zusätzlich kann das Aufweiten der Feder 26 durch das Einführen wenigstens eines Fremdelements 29 zwischen die Federabschnitte 27 bewirkt werden. Besonders effektiv ist es dabei, wenn das wenigstens eine Fremdelement in Längsrichtung des Verbindungsprofils 16 zwischen den Federabschnitten 27 verläuft. Der Einfachheit halber kann das wenigstens eine Fremdelement 29 von wenigstens einem Längsende des Verbindungsprofils 16 eingeschoben werden. Dabei bietet sich grundsätzlich eine stabförmige Ausbildung des Fremdelements 29 an. Dies ist bei der Profilverbindung 15 gemäß Fig. 2B dargestellt, die ansonsten der Profilverbindung 15 gemäß Fig. 2A entspricht.

Beim dargestellten und insoweit bevorzugten Aufbau 2 weisen die Federabschnitte 27 nach außen gerichtete Rastvorsprünge 30 auf, die mit nach innen gerichteten und an den durch die Federn 24 gebildeten Nutflanken vorgesehenen Rastvorsprüngen 31 in Eingriff gelangen können. Die Rastvorsprünge ermöglichen die Ausbildung einer Rastverbindung zwischen den die Profilverbindung 15 bildenden Verbindungsprofilen 16,17 durch gegenseitiges Hintergreifen der Rastvorsprünge 30,31. Die Rastvorsprünge 30 wenigstens eines Federelements 27 müssen jedoch keine Rastverbindung mit der korrespondierenden Nut 28 eingehen.

Die Nutflanken 25 bilden, beim dargestellten und insoweit bevorzugten Aufbau 2 zusammen mit den die Anschläge 21 aufweisenden Nasen 22 Federn 32, die in jeweils eine Nut 33 des Verbindungsprofils 17 des Anbauteils 18 eingreifen. Zusätzlich greifen bei dem dargestellten und insoweit bevorzugten Aufbau 2 noch die Decklagen 9 in die Nuten 33 ein. Somit werden die Ränder der Decklagen 9 in den entsprechenden Nuten 33 aufgenommen und das Eindringen etwa von Feuchtigkeit vermieden, indem das Verbindungsprofil 17 des Anbauteils 18 die Ränder der Decklagen 9 außen umgreift. Die entsprechenden Nuten 33 umgreifen dabei mit den inneren Nutflanken die Ränder der Decklagen 9. Um die Paneele 13 gegenüber dem Eindringen etwa von Feuchtigkeit oder Schmutz von der Außenseite des Aufbaus 2 stärker zu schützen als vom Laderaum des Aufbaus 2 aus, übergreift das Verbindungsprofil 17 des Anbauteils 18 den Rand des Paneels 13 an dieser Seite weiter als an der gegenüberliegenden Seite des Paneels 13, respektive des Verbindungsprofils 16.

Zur sicheren und dauerhaften Verbindung der Verbindungsprofile 16,17 zur Profilverbindung 15 wird beim dargestellten und insoweit bevorzugten Aufbau 2 vor dem Fügen der Verbindungsprofile 16,17 ein Klebstoff 34 in die zentrale Nut 28 des Verbindungsprofils 17 des Anbauteils 18 eingebracht. Die Nut 28 wird dabei soweit gefüllt, dass der Klebstoff 34 beim Einführen der zentralen Feder 26 des Verbindungsprofils 16 des Paneels 13 in die zentrale Nut 28 teilweise aus der Nut 28 verdrängt wird. Der Klebstoff 34 gelangt dabei teilweise in die sich an die zentrale Feder 26 angrenzenden Nuten 23 des Verbindungsprofils 16 des Paneels 13 und ferner teilweise in die beiden äußeren Nuten 33 des Verbindungsprofils 17 des Anbauteils 18.

Die Profilverbindung 15, die Rastvorsprünge 30,31 und/oder der Klebstoff 34 sind so ausgebildet und angeordnet, dass die Verbindungsprofile 16,17 bedarfsweise etwas weiter oder weniger weit ineinander geschoben werden können, etwa um einen Toleranzausgleich bereitzustellen. Die Profilverbindung 15 kann dann dennoch zuverlässig und fest gefügt werden.

In der der Außenseite des Aufbaus 2 zugeordneten Nut 33 des Verbindungsprofils 17 des Anbauteils 18 ist ein Dichtelement 35 vorgesehen, und zwar insbesondere im Bereich des Nutgrunds. Dort ist beim dargestellten und insoweit bevorzugten Aufbau 2 ebenso wie an der Spitze der zugehörigen Feder 32 des Verbindungsprofils 16 des Paneels 13 ein Vorsprung 36 vorgesehen. Zwischen dem Nut 33 und der Feder 32, respektive zwischen den Vorsprüngen 36, wird ein elastisches Dichtmittel 35 unter Abdichtung des Spalts zwischen der äußeren Nutflanke 37 und der Feder 32 deformiert.

Zwischen den äußeren, mit den Decklagen 9 verklebten Elementen des Verbindungsprofils 16 des Paneels 13 ist ein Entlüftungskanal 38 vorgesehen, der zu den beiden gegenüberliegenden Längssenden des Verbindungsprofils 16 offen sind. Während der Innenraum des Paneels 13 zwischen den Decklagen 9 unter Bildung der Kernlage 10 ausgeschäumt wird, wird Luft verdrängt, die so über den Entlüftungskanal 38 nach außen abgeführt werden kann. Damit die Luft in den Entlüftungskanal 38 gelangen kann, kann wenigstens eine Öffnung 39 im Entlüftungskanal 38 vorgesehen sein, und zwar an der der Kernlage 10 zugewandten Seite des Entlüftungskanals 38. Die Öffnung 39 ist beim dargestellten und insoweit bevorzugten Aufbau 2 als Bohrung mit kreisrundem Querschnitt ausgebildet, was jedoch nur eine bevorzugte Ausgestaltung der Öffnung 39 darstellt.

Im Bereich des Entlüftungskanals 38 weist das Verbindungsprofil 16 vier im Wesentlichen schräg zu einer Senkrechten des Paneels 13 und schräg zu einer Parallelen des Paneels 13 ausgerichtete Stege 40,10 auf. Zwei dieser Stege 40 weisen von außen schräg nach oben, und zwar vorliegend in Richtung der zentralen Feder 26. Die zwei übrigen Stege 41 weisen von außen schräg nach unten und damit vorliegend von der zentralen Feder 26 hin zur Kernlage 10. Die Stege 40,41 weisen zumindest auf einer Seite einen Winkel α,β zu einer Ebene parallel zum Paneel 13 auf der entweder maximal 80° oder maximal 45° beträgt. Dementsprechend werden auch die seitlich von außen auf das Verbindungsprofil 16 einwirkenden Druckkräfte entsprechend schräg bezogen zu einer Parallelen und Senkrechten des Paneels 13 abgeleitet. Die Druckkräfte können folglich, sofern die abzuleitenden Kräfte hoch genug sind, die Stege 40,41 verstellen und zwar insbesondere nach außen, wobei die Breite des Verbindungsprofils 16 senkrecht zu den Decklagen 9 abnimmt. Das Verbindungsprofil 16 stellt also eine gewisse Querelastizität bereit. Dies ist zweckmäßig, wenn das Paneel 13 mitsamt dem wenigstens einen Verbindungsprofil 16 und den Decklagen 9, etwa zum Ausschäumen des Paneels 13, in eine Presse eingebracht wird. Dann kann in der Presse ein Toleranzausgleich in einer Richtung senkrecht zu den Decklagen 9 erfolgen, indem die Verbindungsprofile 16 bedarfsweise in dieser Richtung zusammengedrückt werden.

An dem in Richtung der Kernlage 10 weisenden Ende des Verbindungsprofils 16 weist dieses eine Aufnahme 42 für geschäumten Kunststoff auf, der sich infolge des Ausschäumens des Paneels 13 zur Bildung der Kernlage 10 teilweise in die Aufnahme 42 hinein erstreckt. Die Aufnahme 42 weist dabei an den gegenüberliegenden Seiten der Aufnahme 42 Rippenstrukturen 43 auf, die von der Kernlage 10 und parallel zum Paneel 13 gesehen Hinterschneidungen bilden, deren Hinterschnitte beim dargestellten und insoweit bevorzugten Aufbau 2 von dem geschäumten Kunststoff der Kernlage 10 hintergriffen werden. Es besteht daher ein Formschluss zwischen der Kernlage 10 und dem Verbindungsprofil 16, jedenfalls in Auszugsrichtung des Verbindungsprofils 16.

Nicht im Einzelnen dargestellt ist, dass das Paneel 13 an den übrigen drei Schmalseiten gleichartige Verbindungsprofile 16, insbesondere entsprechend dem in der Fig. 2A-B dargestellten Verbindungsprofil 16, aufweist. Die Verbindungsprofile 16 sind dann wiederum bedarfsweise mit Verbindungsprofilen 17 von Anbauteilen 18 unter Bildung einer Profilverbindung 15 verbunden. Die Verbindungsprofile 17 der Anbauteile 18 sind dabei insbesondere untereinander gleichartig aufgebaut, auch wenn die Verbindungsprofile 17 bedarfsweise stark oder geringfügig voneinander abweichen können.

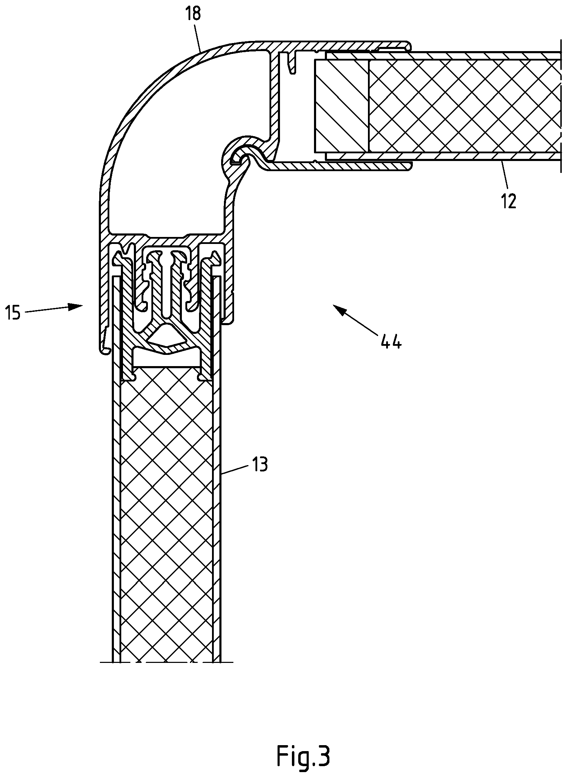

In der Fig. 3 ist die Verbindung 44 eines Seitenwandpaneels 13 mit dem Dachpaneel 12 umfassend die Profilverbindung 15 gemäß Fig. 2A-B dargestellt. Das Anbauteil 18 ist dabei insgesamt L-förmig ausgebildet, um das Seitenwandpaneel 13 und das Dachpaneel 12 miteinander zu verbinden. In entsprechender Weise ist das Seitenwandpaneel 13 mit dem Stirnwandpaneel 11 verbunden. Das Stirnwandpaneel 11 ist dann wie das Dachpaneel 12 mit dem Anbauteil 18 verbunden, insbesondere verklebt.

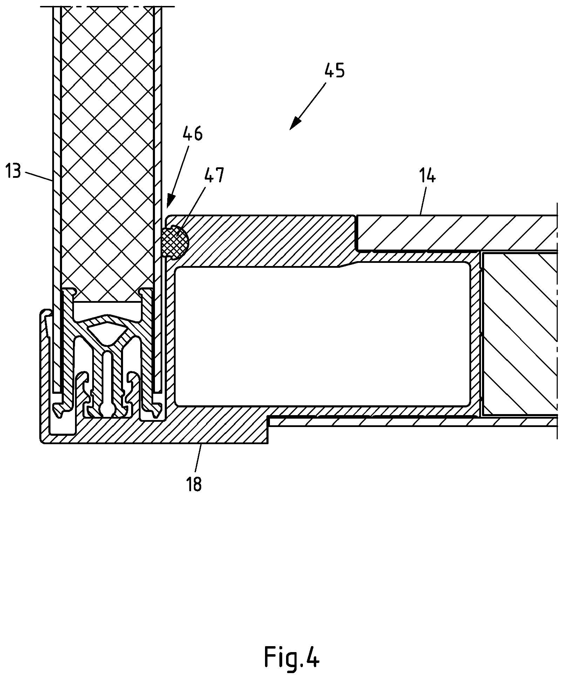

In der Fig. 4 ist die Verbindung 45 zwischen dem Seitenwandpaneel 13 und dem Boden 14 des Aufbaus 2 dargestellt. Das Anbauteil 18 ist in diesem Fall länglich ausgebildet und bildet einen ergänzenden seitlichen Anschlag 46, an dem sich das Seitenwandpaneel 13 an einem Dichtelement 47 abstützt.

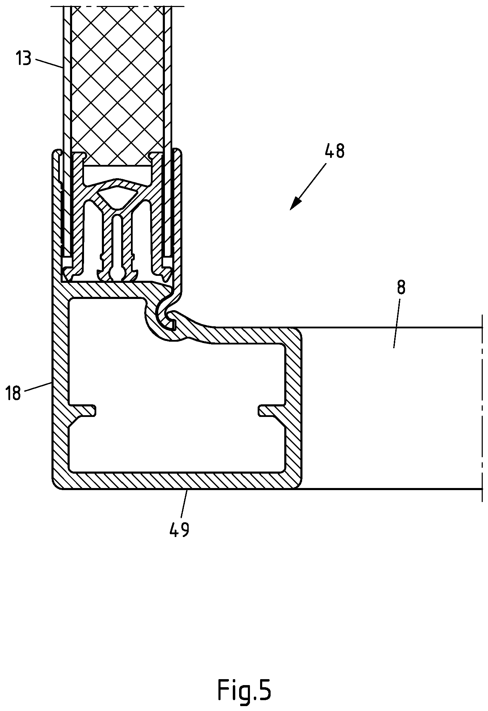

In der Fig. 5 ist die Verbindung 48 zwischen dem Seitenwandpaneel 13 und dem Anbauteil 18 in Form des Rückwandrahmens 8, respektive des Rückwandrahmenelements 49 des Rückwandrahmens 8, dargestellt. Die Verbindung 47 zwischen dem Rückwandrahmenelement 49 und dem Seitenwandpaneel 13 kommt dabei ohne ein weiteres Verbindungsprofil aus. Zur Vereinfachung der Fertigung des Seitenwandpaneels 13 und/oder des Aufbaus 2 und um möglichst viele Gleichteile verwenden zu können, weist das Seitenwandpaneel 13 angrenzend zum Rückwandrahmen 8 dennoch ein Verbindungsprofil 16 nach der Art des in der Fig. 2A-B dargestellten Verbindungsprofils 16 des Paneels 13 auf. Das Verbinden des Seitenwandpaneels 13 und des Anbauteils 18 des Rückwandrahmenelements 49 erfolgt durch Verkleben das Anbauteils 18 mit der Außenseite des Seitenwandpaneels 13. An dem Rückwandrahmenelement 49 ist bei dem dargestellten Aufbau 2 über Scharniere eine Tür 7 angeschlagen.

## Patentansprüche

1. Aufbau (2) eines Nutzfahrzeugs (1), insbesondere eines Lastkraftwagens, Anhängers oder Sattelaufliegers, mit wenigstens einem Paneel, vorzugsweise einem Stirnwandpaneel (11), einem Seitenwandpaneel (13) oder einem Dachpaneel (12), und mit wenigstens einem über eine Profilverbindung (15) mit dem Paneel verbundenen Anbauteil (18), vorzugsweise eines weiteren Paneels, eines Bodens (14) und/oder eines Rückwandrahmens (8), wobei das wenigstens eine Paneel wenigstens zwei äußere strukturgebende Decklagen (9) aufweist, wobei die Profilverbindung (15) als Nut/Feder-Verbindung aus zwei korrespondierenden und miteinander verklebten Verbindungsprofilen (16,17) gebildet ist, und wobei die Profilverbindung (15) wenigstens zwei Nuten (23,28,33) und wenigstens zwei mit den wenigstens zwei Nuten (23,28,33) in Eingriff stehende Federn (24,26,32) aufweist,
**dadurch gekennzeichnet, dass**
ein Verbindungsprofil (16) der Profilverbindung (15) eine nach außen weisende und mit einer nach außen weisenden äußeren Decklage (9) des Paneels verklebte Längsseite aufweist.

2. Aufbau nach Anspruch 1,
**dadurch gekennzeichnet, dass**
die wenigstens zwei Nuten (23,28,33) wenigstens teilweise mit einem Klebstoff (34) ausgefüllt und mit den jeweils in die Nuten (23,28,33) eingreifenden Federn (24,26,32) verklebt sind und, vorzugsweise, dass sich der Klebstoff (34) zusammenhängend von wenigstens einer Nut (23,28,33) bis in wenigstens eine andere Nut (23,28,33), insbesondere eines Verbindungsprofils (16,17), erstreckt.

3. Aufbau nach Anspruch 1 oder 2,
**dadurch gekennzeichnet, dass**
die Profilverbindung (15) wenigstens eine Rastverbindung, insbesondere zwischen wenigstens einer Nut (23,28,33) und einer in die Nut (23,28,33) eingreifenden Feder (24,26,32), aufweist, und, vorzugsweise, dass die Rastverbindung zwischen beiden Nutflanken einer Nut (23,28,33) und der in die Nut (23,28,33) eingreifenden Feder (24,26,32), vorgesehen ist.

4. Aufbau nach einem der Ansprüche 1 bis 3,
**dadurch gekennzeichnet, dass**
wenigstens eine Feder (26) wenigstens zwei gegenüberliegenden Nutflanken zugeordnete und gegeneinander in Richtung der zugeordneten Nutflanken verstellbare Federabschnitte (27) aufweist und, vorzugsweise, dass die Federabschnitte (27) durch Einbringen eines Fremdelements (29) zwischen die Federabschnitte (27) unter Aufweitung der Feder (26) gegeneinander in Richtung der jeweils zugeordneten Nutzflanken verstellt sind.

5. Aufbau nach einem der Ansprüche 1 bis 4,
**dadurch gekennzeichnet, dass**
das Paneel wenigstens zwei äußere strukturgebende Decklagen (9) jeweils umfassend wenigstens eine Strukturlage, insbesondere aus Kunststoff, faserverstärktem Kunststoff, Stahl oder Aluminium und, vorzugsweise eine dazwischen angeordnete Kernlagen (10) aus einem, insbesondere geschäumten, Kunststoff aufweist.

6. Aufbau nach Anspruch 5,
**dadurch gekennzeichnet, dass**
ein Verbindungsprofil (16) der Profilverbindung (15) an zwei einander gegenüberliegenden, äußeren Längsseiten jeweils einen Anschlag (21) zur Anlage an ein freies Ende einer Decklage (9) des Paneels aufweist.

7. Aufbau nach einem der Ansprüche 1 bis 6,
**dadurch gekennzeichnet, dass**
ein Verbindungsprofil (17) der Profilverbindung (15) an zwei einander gegenüberliegenden äußeren Längsseiten jeweils eine, vorzugsweise eine Nutflanke (37) bildende, des Paneel, insbesondere im Bereich äußerer Decklagen (9) umgreifende, Rippen aufweist.

8. Aufbau nach einem der Ansprüche 5 bis 7,
**dadurch gekennzeichnet, dass**
wenigstens ein Verbindungsprofil (15) eine zur gegenüberliegenden Schmalseite des Paneels offene Aufnahme (42) aufweist, dass die Aufnahme (42) von der gegenüberliegenden Schmalseite gesehen wenigstens eine Hinterschneidung aufweist und dass ein eine Kernlage (10) des Paneels bildender geschäumter Kunststoff sich bis in die Aufnahme (42) erstreckt und die wenigstens eine Hinterschneidung formschlüssig hintergreift.

9. Aufbau nach einem der Ansprüche 1 bis 8,
**dadurch gekennzeichnet, dass**
in wenigstens einer Nut (33) wenigstens eines Verbindungsprofils (17) ein einen Spalt zwischen der Nut (33) und der in die Nut (33) eingreifenden Feder (32) abdichtendes Dichtelement (35), vorzugsweise zwischen einem freien Ende der Feder (32) und dem Nutgrund der Nut (33), vorgesehen ist.

10. Aufbau nach einem der Ansprüche 1 bis 9,
**dadurch gekennzeichnet, dass**
wenigstens ein Verbindungsprofil (16) wenigstens einen sich in Längsrichtung des Verbindungsprofils (16) erstreckenden und an wenigstens einem Längsende der Verbindungsprofils (16) offenen Entlüftungskanal (38) aufweist und, vorzugsweise, dass der Entlüftungskanal (38) zwischen den Längsenden des Verbindungsprofils (16) wenigstens eine Öffnung (39) zum Inneren des Paneels aufweist.

11. Aufbau nach einem der Ansprüche 1 bis 10,
**dadurch gekennzeichnet, dass**
wenigstens ein Verbindungsprofil (16,17) wenigstens im Wesentlichen symmetrisch zu einer Ebene parallel zum Paneel ausgebildet ist.

12. Aufbau nach einem der Ansprüche 1 bis 11,
**dadurch gekennzeichnet, dass**
zwei einander gegenüberliegende, nach außen weisende Längsseiten eines Verbindungsprofils (16) über wenigstens ein Scharnierelement und/oder wenigstens einen sich in einem Winkel von maximal 80°, vorzugsweise wenigstens 70°, zu einer Ebene parallel zum Paneel erstreckenden Steg (40,41) derart miteinander verbunden sind, so dass die Breite des Verbindungsprofils (16) durch Verstellen des Scharnierelements und/oder des wenigstens einen Stegs (40,41) infolge einer Druckkraft in Querrichtung des Verbindungsprofils (16) variierbar ist.

13. Aufbau nach einem der Ansprüche 1 bis 12,
**dadurch gekennzeichnet, dass**
ein Verbindungsprofil (16) aus Kunststoff, vorzugsweise als Extrusionsprofil, gebildet ist und/oder dass ein Verbindungsprofil (17) aus Metall, insbesondere Stahl oder Aluminium gebildet ist.

14. Aufbau nach einem der Ansprüche 1 bis 13,
**dadurch gekennzeichnet, dass**
wenigstens ein Paneel an wenigstens zwei, vorzugsweise wenigstens drei, insbesondere vier, Schmalseiten ein, insbesondere wenigstens gleichartiges, Verbindungsprofil (16) aufweist.

## Claims

1. Body (2) of a commercial vehicle (1), in particular a heavy goods vehicle, trailer or semitrailer, with at least one panel, preferably a front wall panel (11), a side wall panel (13) or a roof panel (12) and with at least one attachment part (18), preferably of a further panel, of a floor (14) and/or of a rear wall frame (8), connected via a profile connection (15) to the panel, wherein the at least one panel has at least two outer structure-forming top layers (9), wherein the profile connection (15) is formed as a groove/spring connection of two corresponding connection profiles (16, 17) adhered together and wherein the profile connection (15) has at least two grooves (23, 28, 33) and at least two springs (24, 26, 32) engaging with the at least two grooves (23, 28, 33), **characterised in that** a connection profile (16) of the profile connection (15) has a longitudinal side pointing outwards and adhered to an outer top layer (9) of the panel pointing outwards.

2. Body according to claim 1, **characterised in that** the at least two grooves (23, 28, 33) are filled at least partially with an adhesive (34) and adhered with the springs (24, 26, 32) engaging in each case into the grooves (23, 28, 33), and preferably **in that** the adhesive (34) extends in a continuous manner from at least one groove (23, 28, 33) into at least one other groove (23, 28, 33), in particular of a connection profile (16, 17).

3. Body according to claim 1 or 2, **characterised in that** the profile connection (15) has at least one snap connection, in particular between at least one groove (23, 28, 33) and a spring (24, 26, 32) engaging into the groove (23, 28, 33), and preferably **in that** the snap connection is provided between both groove flanks of a groove (23, 28, 33) and the spring (24, 26, 32) engaging into the groove (23, 28, 33).

4. Body according to any one of claims 1 to 3, **characterised in that** at least one spring (26) has at least two spring sections (27) assigned to opposing groove flanks and adjustable towards one another in the direction of the assigned groove flanks and preferably **in that** the spring sections (27) are adjusted by introducing a extraneous element (29) between the spring sections (27), expanding the spring (26) against one another in the direction of the respectively assigned groove flanks.

5. Body according to any one of claims 1 to 4, **characterised in that** the panel has at least two outer structure-forming top layers (9) in each case comprising at least one structure layer, in particular made of plastic, fibre-reinforced plastic, steel or aluminium and preferably a core layer (10) arranged therebetween made of a, in particular foamed, plastic.

6. Body according to claim 5, **characterised in that** a connection profile (16) of the profile connection (15) at two outer longitudinal sides opposed to one another has in each case a stop (21) for abutment against a free end of a top layer (9) of the panel.

7. Body according to any one of claims 1 to 6, **characterised in that** a connection profile (17) of the profile connection (15) has at two outer longitudinal sides opposed to one another in each case one rib forming preferably one groove flank (37), surrounding the panel, in particular in the region of outer top layers (9).

8. Body according to any one of claims 5 to 7, **characterised in that** at least one connection profile (15) has a receiving portion (42) open to the opposing narrow side of the panel, **in that** the receiving portion (42) has at least one undercut viewed from the opposing narrow side and **in that** a foamed plastic forming a core layer (10) of the panel extends into the receiving portion (42) and engages behind the at least one undercut in a positive-locking manner.

9. Body according to any one of claims 1 to 8, **characterised in that** a sealing element (35) sealing a gap between the groove (33) and the spring (32) engaging into the groove (33) is provided in at least one groove (33) of at least one connection profile (17), preferably between a free end of the spring (32) and the groove base of the groove (33).

10. Body according to any one of claims 1 to 9, **characterised in that** at least one connection profile (16) has at least one venting channel (38) extending in the longitudinal direction of the connection profile (16) and open at at least one longitudinal end of the connection profile (16) and, preferably **in that** the venting channel (38) between the longitudinal ends of the connection profile (16) has at least one opening (39) to the interior of the panel.

11. Body according to any one of claims 1 to 10, **characterised in that** at least one connection profile (16, 17) is formed at least substantially symmetrical to a plane parallel to the panel.

12. Body according to any one of claims 1 to 11, **characterised in that** two opposing longitudinal sides of a connection profile (16) pointing outwards are connected to one another via at least one hinge element and/or at least one web (40, 41) extending at an angle of maximum 80°, preferably at least 70°, to a plane parallel to the panel such that the width of the connection profile (16) is variable by adjusting the hinge element and/or the at least one web (40, 41) as a result of a pressure force in the transverse direction of the connection profile (16).

13. Body according to any one of claims 1 to 12, **characterised in that** a connection profile (16) is formed of plastic, preferably as an extruded profile and/or **in that** a connection profile (17) is formed of metal, in particular steel or aluminium.

14. Body according to any one of claims 1 to 13, **characterised in that** at least one panel at at least two, preferably at least three, in particular four narrow sides, has an in particular at least similar connection profile (16).

## Revendications

1. Assemblage (2) d'un véhicule (1), en particulier d'un poids lourd, d'une remorque ou semi-remorque comprenant au moins un panneau, de préférence un panneau de paroi frontale (11), un panneau de paroi latérale (13) ou un panneau de toiture (12), et avec au moins une pièce rapportée (18), de préférence d'un autre panneau, d'un plancher (14) et/ou d'un cadre de paroi arrière (8), reliée par une liaison de profil (15) au panneau, le au moins un panneau présentant deux couches de revêtement (9) extérieures structurantes, la liaison de profil (15) étant conçue en tant qu'assemblage à rainure et languette à partir de deux profilés d'assemblage (16, 17) correspondants et collés l'un à l'autre, et la liaison de profil (15) présentant au moins deux rainures (23, 28, 33) et au moins deux languettes (24, 26, 32) étant en prise avec les au moins deux rainures (23, 28, 33), **caractérisé en ce qu'**un profilé d'assemblage (16) de la liaison de profil (15) présente un côté longitudinal opposé dirigé vers l'extérieur et étant collé avec une couche de revêtement (9) extérieure du panneau dirigée vers l'extérieur.

2. Assemblage selon la revendication 1, **caractérisé en ce que** les au moins deux rainures (23, 28, 33) sont remplies au moins partiellement avec une colle (34) et sont collées avec les languettes (24, 26, 32) venant en prise respectivement avec les rainures (23, 28, 33) et, de préférence, **en ce que** la colle (34) s'étend de manière continue à partir d'au moins une rainure (23, 28, 33) jusqu'à au moins une autre rainure (23, 28, 33), en particulier d'un profilé d'assemblage (16, 17).

3. Assemblage selon la revendication 1 ou 2, **caractérisé en ce que** la liaison de profil (15) présente au moins une liaison par encliquetage, en particulier entre au moins une rainure (23, 28, 33) et une languette (24, 26, 32) venant en prise avec la rainure (23, 28, 33), et, de préférence, **en ce que** la liaison par encliquetage est prévue entre les deux flancs de rainure d'une rainure (23, 28, 33) et la languette (24, 26, 32) venant en prise avec la rainure (23, 28, 33).

4. Assemblage selon l'une des revendications 1 à 3, **caractérisé en ce qu'**au moins une languette (26) présente au moins deux sections de languette (27) associées aux flancs de rainure opposés et réglables l'une par rapport à l'autre en direction des flancs de rainure associés et, de préférence, **en ce que** les sections de languette (27) sont réglées l'une par rapport à l'autre par l'apport d'un élément étranger (29) entre les sections de languette (27) sous l'effet d'un élargissement de la languette (26) en direction des flancs de rainure respectivement associés.

5. Assemblage selon l'une des revendications 1 à 4, **caractérisé en ce que** le panneau présente au moins deux couches de revêtement (9) extérieures structurantes comportant, respectivement, au moins une couche de structure, en particulier en matière plastique, en matière plastique renforcés par fibres, en acier ou en aluminium et, de préférence une couche de noyau agencée intercalée (10) en une matière plastique, en particulier moussée.

6. Assemblage selon la revendication 5, **caractérisé en ce qu'**un profilé d'assemblage (16) de la liaison de profil (15) présente respectivement une butée (21) sur deux côtés longitudinaux extérieurs mutuellement opposés, destinée à s'appuyer contre une extrémité libre d'une couche de revêtement (9) du panneau.

7. Assemblage selon l'une des revendications 1 à 6, **caractérisé en ce qu'**un profilé d'assemblage (17) de la liaison de profil (15) présente, sur deux côtés longitudinaux extérieurs opposés, respectivement une nervure, de préférence formant un flanc de rainure (37), enveloppant le panneau, en particulier la section de la couche de revêtement extérieure (9).

8. Assemblage selon l'une des revendications 5 à 7, **caractérisé en ce qu'**au moins un profilé d'assemblage (15) présente un logement (42) ouvert vers le côté étroit opposé du panneau, **en ce que** le logement (42) présente, vu par le côté étroit opposé, au moins une partie en contre-dépouille et **en ce qu'**une matière plastique moussée formant une couche de noyau (10) du panneau s'étend jusque dans le logement (42) et vient en prise par derrière, par liaison de forme, avec la au moins une partie en contre-dépouille.

9. Assemblage selon l'une des revendications 1 à 8, **caractérisé en ce que** l'on prévoit dans au moins une rainure (33) d'au moins un profilé d'assemblage (17) un élément d'étanchéité (35) assurant l'étanchéité d'une fente entre la rainure (33) et la languette (32) venant en prise avec la rainure (33), de préférence entre une extrémité libre de la languette (32) et le fond de rainure de la rainure (33).

10. Assemblage selon l'une des revendications 1 à 9, **caractérisé en ce qu'**au moins un profilé d'assemblage (16) présente au moins un canal de ventilation (38) s'étendant en direction longitudinale du profilé d'assemblage (16) et ouvert sur au moins une extrémité longitudinale du profilé d'assemblage (16) et, de préférence, **en ce que** le canal de ventilation (38) présente au moins une ouverture (39) entre les extrémités longitudinales du profilé d'assemblage (16) vers l'intérieur du panneau.

11. Assemblage selon l'une des revendications 1 à 10, **caractérisé en ce qu'**au moins un profilé d'assemblage (16, 17) est conçu au moins essentiellement de manière symétrique par rapport à un plan parallèle au panneau.

12. Assemblage selon l'une des revendications 1 à 11, **caractérisé en ce que** deux côtés longitudinaux opposés, dirigés vers l'extérieur, d'un profilé d'assemblage (16) sont mutuellement reliés par au moins un élément formant charnière et/ou au moins une tige (40, 41) s'étendant dans un plan parallèle au panneau dans un angle d'au maximum 80°, de préférence au moins 70°, de telle sorte que la largeur du profilé d'assemblage (16) est susceptible de pouvoir varier par le réglage de l'élément formant charnière et/ou d'au moins une tige (40,41) à la suite d'une force de compression en direction transversale du profilé d'assemblage (16).

13. Assemblage selon l'une des revendications 1 à 12, **caractérisé en ce qu'**un profilé d'assemblage (16) est formé en matière plastique, de préférence en tant que profilé extrudé, et/ou **en ce qu'**un profilé d'assemblage (17) est formé en métal, en particulier en acier ou aluminium.

14. Assemblage selon l'une des revendications 1 à 13, **caractérisé en ce que** au moins un panneau présente sur au moins deux, de préférence trois, en particulier quatre côtés étroits un profilé d'assemblage (16), en particulier au moins similaire.
